# EUROPÄISCHE PATENTSCHRIFT

(11) **EP 3 045 944 B1**
(45) Veröffentlichungstag und Bekanntmachung des Hinweises auf die Patenterteilung: **17.06.2020**
(21) Anmeldenummer: 15151604.4
(22) Anmeldetag: 19.01.2015
(51) Int. Cl.: G02B 6/00, F21V 8/00, B60Q 1/26, B60R 1/12, F21S 43/239, F21S 43/31

(54) **Lichtleitvorrichtung**
Light guiding device
Dispositif de conducteur lumineux

(43) Veröffentlichungstag der Anmeldung: 20.07.2016
(60) Teilanmeldung: 18173316.3
(73) Patentinhaber: SMR Patents S.à.r.l., 2453 Luxembourg (LU)
(72) Erfinder: Kürschner, Norbert, 30900 Wedemark (DE); Fritz, Daniel, 70374 Stuttgart (DE)
(74) Vertreter: Weber-Bruls, Dorothée

(56) Entgegenhaltungen:
- EP-A1- 1 970 736
- EP-A1- 2 463 157
- EP-A2- 1 167 870
- EP-A2- 2 636 947
- WO-A1-01/27529
- DE-U1-202012 100 398
- US-B1- 6 428 176

## Beschreibung

Die Erfindung betrifft eine Kraftfahrzeug-Beleuchtungsvorrichtung in einer Anzeigevorrichtung in einer Rückblickvorrichtung, mit einer Rückblick-Reflexionsfläche, einem Leuchtmittel und einer Lichtleitvorrichtung, wobei die Lichtleitvorrichtung, Lichtquelle und Rückblick-Reflexionsfläche so zueinander angeordnet sind, dass das von der Lichtquelle emittierte Licht durch die Lichtleitvorrichtung auf eine vom Fahrer des Fahrzeugs abgewandte Seite der Rückblick-Reflexionsfläche umlenkt wird.. Die Erfindung betrifft auch ein Herstellungsverfahren und eine Rückblickvorrichtung.

Bei bekannten Lichtleitvorrichtungen hat es sich als nachteilig erwiesen, dass das von der Lichtleitvorrichtung umgelenkte Licht verhältnismäßig inhomogen über eine zu beleuchtende Fläche ausgekoppelt wird. Dieser Effekt wird umso deutlicher, je größer die zu beleuchtende Fläche ist und je weiter die zu beleuchtende Fläche von einer Lichtquelle entfernt ist. Wird beispielsweise ein Piktogramm einer Totwinkelanzeige geringer Strichstärke, beispielsweise 0,4 mm, mittels bekannter Lichtleitvorrichtungen hinterleuchtet, kann die Inhomogenität vernachlässigbar sein. Mit zunehmender Strichstärke des Piktogramms, beispielsweise 1,0 mm, wird die Inhomogenität jedoch sehr deutlich sichtbar und von einem Benutzer als störend empfunden. Bei sehr ungleichmäßiger Ausleuchtung eines Piktogramms kann dieses im Extremfall dazu führen, dass eine Warnanzeige vom Benutzer als nicht beleuchtet fehlgedeutet wird.

Die WO 01/27529 A1 beschreibt einen Lichtleiter mit einer Eingangs-Kantenfläche, einer Rückfläche und einer Ausgangsfläche, wobei ein Reflektor direkt an der Rückfläche durch zum Beispiel Kleben befestigt ist.

Eine Rückblickspiegelanordnung ist aus der EP 2 463 157 A1 bekannt, und zwar mit mindestens einer Spiegelbasis, mit einer Spiegelkopfbedeckung, die ein Spiegelglas in dem Spiegelkopf abdeckt, und mit einer optischen Warnanzeige, die Licht in Reaktion auf ein Sensorsignal erzeugt, um einen Fahrer über gefährliche Informationen zu informieren, wobei das Licht durch das Spiegelglas scheint. Das Spiegelglas ist auf einer Trägerplatte montiert, die einen Montageraum für mindestens eine LED und mindestens eine abgeschrägten Lichtleiter aufweist.

Die EP 1 167 870 A2 offenbart eine Leuchte für Fahrzeuge, insbesondere für Kraftfahrzeuge, bestehend aus einem Leuchtengehäuse, das in Abstrahlrichtung von einer Abschlussscheibe begrenzt wird, und mindestens einem länglichen Lichtleitelement, das auf einer Vorderseite eine Lichtaustrittsfläche, auf einer der Vorderseite abgewandten Rückseite eine Reflexionsfläche und an einem ersten Ende eine Lichteinkoppelfläche mit einer vorgelagerten Lichtquelle aufweist, wobei die Lichtaustrittsfläche des Lichtleitelements als Teil der Abschlussscheibe ausgebildet ist.

Aus der DE 20 2012 100 398 U1 ist eine Beleuchtungseinrichtung mit zumindest einem, auf einer Leiterplatte angeordneten, über diese an ein Versorgungsnetz anschliessbaren Leuchtmittel bekannt, wobei die Leiterplatte zumindest teilweise in eine lichtdurchlässige erste Vergussmasse eingebettet ist, welche einen gezielten Lichtaustritt des von dem Leuchtmittel erzeugten Lichtes über zumindest einen Lichtaustrittsbereich ermöglicht. Die Leiterplatte ist dabei senkrecht zum Lichtaustrittsbereich verlaufend, zumindest teilweise von der ersten lichtdurchlässigen Vergussmasse umgeben, in dieser angeordnet, und in der ersten Vergussmasse ist zumindest ein Lichtbeeinflussungselement angeordnet ist, welches an zumindest einer seiner beiden Hauptflächen Licht reflektierende Eigenschaften aufweist.

Die EP 1 970 736 A1 betrifft einen Rückblickspiegel für Fahrzeuge, vorzugsweise für Kraftfahrzeuge, mit einem auf einer Trägerplatte befestigten Spiegelglas, einer hinter dem Spiegelglas und der Trägerplatte angeordneten Anzeigeeinheit, die mit wenigstens einem Leuchtmittel einen Lichtstrahl erzeugt, der in einen Lichtleiter einkoppelbar ist, der mit einer Auskoppeloptik versehen ist, mit der der Lichtstrahl durch wenigstens einen mindestens teilweise reflexionsfreien Bereich des Spiegelglases nach aussen gelenkt wird, wobei das durch das Spiegelglas hindurchtretende Licht in Richtung auf den Fahrer gelenkt wird.

Ein Lichtröhren- oder Beleuchtungsverteiler einer hinterleuchteten Flüssigkristall-Anzeigetafel in einem Scharnier- oder Kipp-Display für einen Laptop-Computer ist aus der US 6,428,176 B1 bekannt. Dabei kommt eine hochreflektierende, aufgedampfte Beschichtung zum Einsatz, um das Entweichen von Licht außer durch die vordere oder Austrittsfläche des Beleuchtungsverteilers neben der Rückseite einer Flüssigkristall-Anzeigetafel zu kontrollieren und zu eliminieren.

Aus der EP 2 636 947 A2 ist eine Beleuchtungsvorrichtung bekannt, die eine gedruckte Leiterplatte, eine oder mehrere lichtemittierende Einheiten, die auf der gedruckten Leiterplatte ausgebildet sind, eine Harzschicht, die auf der gedruckten Leiterplatte ausgebildet ist, in der die lichtemittierenden Einheiten eingebettet sind, und eine Diffusionsplatte, die auf einer oberen Seite der Harzschicht ausgebildet ist, umfasst.

Eine Aufgabe eines Ausführungsbeispiels der Erfindung ist, eine Kraftfahrzeug-Beleuchtungsvorrichtung in einer Anzeigevorrichtung in einer Rückblickvorrichtung mit einer Lichtleitvorrichtung bereitzustellen, bei der eine homogene Lichtverteilung auf einer Lichtauskoppelfläche verbessert ist.

Diese Aufgabe wird durch eine Lichtleitvorrichtung mit den Merkmalen des Anspruchs 1 gelöst.

Bevorzugte erfindungsgemäße Kraftfahrzeug-Beleuchtungsvorrichtungen sind in den Ansprüchen 2 bis 8 beschrieben.

Die Lichtleitvorrichtung hat eine Lichteinkoppelseite zum Einkoppeln von Licht einer Lichtquelle in die Lichtleitvorrichtung, eine Reflexionsseite mit einer Reflexionsschicht zur Reflexion des eingekoppelten Lichts, sowie eine Lichtauskoppelseite. Vorzugsweise liegt die Lichtauskoppelseite der Reflexionsseite im Wesentlichen gegenüber. Vorzugsweise nimmt der Abstand zwischen der Reflexionsseite und der Lichtauskoppelseite mit zunehmendem Abstand von der Lichteinkoppelseite im Wesentlichen ab. Diese Abnahme des Abstandes kann zumindest teilweise nicht-linear verlaufen. Mit anderen Worten kann die Reflexionsseite und/oder die Reflexionsschicht relativ zur Lichtauskoppelseite nicht nur linear geneigt sondern auch bogenförmig bzw. gewölbt verlaufen. Die Reflexionsseite mit der Reflexionsschicht ist so ausgestaltet, dass von der Lichteinkoppelseite kommendes Licht zur Lichtauskoppelseite umgelenkt wird, um so eine gleichmäßigere oder möglichst gleichmäßige Lichtverteilung auf der Lichtauskoppelseite zu erzielen.

Die Lichtleitvorrichtung kann einen Lichtleitkörper umfassen, an dem die die Lichteinkoppelseite, die Lichtauskoppelseite und die Reflexionsseite gebildet sind.

Die Lichtleitvorrichtung kann in einer Beleuchtungsvorrichtung eingesetzt werden, um mit einer oder mehreren Lichtquellen mit einer relativ begrenzten Lichtverteilung, beispielsweise LEDs, ein möglichst homogenes Beleuchtungsergebnis über eine gewisse Fläche zu erzielen. Beispielsweise kann die Lichtleitvorrichtung in einer Anzeigevorrichtung eines Kraftraftfahrzeugs eingesetzt werden. Ein Beispiel ist eine Anzeigevorrichtung in einer Rückblickvorrichtung wie einem Fahrassistenten, beispielsweise einem Totwinkelassistenten. Die Lichtleitvorrichtung kann insbesondere zur möglichst homogenen Beleuchtung bzw. Hinterleuchtung eines Piktogramms, beispielsweise eines Totwinkel-Assistenten, verwendet werden.

Die Reflexionsschicht ist an der Reflexionsseite angeordnet. Die Reflexionsschicht ist eine Farb- oder Lackschicht, die auf die Reflexionsseite aufgedruckt wird.

Die Reflexionsschicht kann in anderen Ausführungen aus einem anderen Material oder aus dem gleichen Material wie die restliche Lichtleitvorrichtung sein. Bevorzugte Materialien sind Kunststoffe, insbesondere Acrylnitril-Butadien-Styrol (ABS) und/oder Polymethylmethacrylat (PMMA) oder Kunststoffe mit ähnlichen Materialeigenschaften. Beispielsweise sind sowohl die Reflexionsschicht als auch die restliche Lichtleitvorrichtung aus PMMA. Die Lichtleitvorrichtung kann auch ein 2-Komponenten Kunststoffspritzteil sein, wobei die Reflexionsschicht als ABS Platte, beispielsweise weiß oder farbig, gespritzt und anschließend mit transparentem bzw. klarem PMMA die restliche Lichtleitvorrichtung auf der Reflexionsschicht gebildet wird.

Die Reflexionsseite und/oder die Reflexionsschicht können zumindest teilweise stufenartig und/oder oder wellenartig ausgebildet sein. Die Stufen oder Wellen sind so ausgestaltet, dass das von der Lichteinkoppelseite kommende Licht so umgelenkt wird, dass es möglichst gleichmäßig aus der Lichtauskoppelseite austritt.

Die Lichteinkoppelseite und die Lichtauskoppelseite können flächenartig ausgebildet sein und diese Flächen können im Wesentlichen orthogonal oder annähernd orthogonal zueinander angeordnet sein. Die Flächen der Lichteinkoppelseite der Lichtauskoppelseite können Ebenen bilden. Die Oberfläche der Lichteinkoppelseite kann so ausgestaltet bzw. geformt sein, dass von einer Lichtquelle kommendes Licht möglichst vollständig und vorzugsweise möglichst parallel zur Lichtauskoppelseite in die Lichtleitvorrichtung eingekoppelt wird. Dazu kann insbesondere die Lichteinkoppelseite eine oder mehrere Optiken und/oder Ausnehmungen aufweisen, wobei in die Ausnehmungen Lichtquellen zumindest teilweisen Eingeführt werden können.

Die Lichtleitvorrichtung kann so ausgestaltet sein, dass in die Lichtleitvorrichtung eingekoppeltes und/oder reflektiertes und/oder ausgekoppeltes Licht im Wesentlichen keine Farbänderung erfährt. Dazu kann die Reflexionsschicht aus einem farbneutralen Material, das silberfarben oder weiß ist, sein. Durch Anordnung von einem oder mehreren Farbfiltern an der Lichteinkoppelseite und/oder der Reflexionsseite und/oder der Reflexionsschicht und/oder der Lichtauskoppelseite und/oder innerhalb der Lichtleitvorrichtung kann eine Farbänderung erzielt werden. Das Licht einer Lichtquelle, die weißes Licht emittiert, kann dadurch farbig aus der Lichtleitvorrichtung ausgekoppelt werden, beispielsweise rot oder gelb oder grün. Eine Farbschicht kann eine Temperaturbeständigkeit von ca. -40 °C bis +115 °C aufweisen.

Die Lichtleitvorrichtung kann weiter eine oder mehrere Haltevorrichtungen aufweisen, um die Lichtleitvorrichtung fest oder lösbar an einer Platine zu befestigen.

Die Erfindung beschreibt auch eine Kraftfahrzeug-Beleuchtungsvorrichtung mit einer Lichtleitvorrichtung sowie einer Platine, auf der mindestens eine Lichtquelle angeordnet ist. Die Lichtquelle ist relativ zur Lichtleitvorrichtung so angeordnet, dass das von der Lichtquelle emittierte Licht zumindest teilweise an der Lichteinkoppelseite der Lichtleitvorrichtung eingekoppelt wird. Im weiteren Verlauf wird das Licht von der Reflexionsseite und/oder der Reflexionsschicht reflektiert und an der Lichtauskoppelseite ausgekoppelt. Die Kraftfahrzeug-Beleuchtungsvorrichtung kann in, beispielsweise in einer Anzeigevorrichtung einer Rückblickvorrichtung eines Kraftfahrzeugs eingesetzt werden.

Die Reflexionsschicht kann in einem Tampon-Druck an dem Grundkörper angeordnet, wobei Abdeckschablonen verwendet werden. Weitere Details finden sich in den Ansprüchen 9 und 10.

Eine Rückblickvorrichtung für ein Kraftfahrzeug umfasst eine Rückblick-Reflexionsfläche, ein oder mehrere Leuchtmittel und eine Lichtleitvorrichtung. Sie ist in den Ansprüchen 11 bis 13 beschrieben, wobei das Leuchtmittel und die Lichtleitvorrichtung eine Anzeige eines Totwinkelassistenten sein können. Lichtleitvorrichtung, Lichtquelle und Rückblick-Reflexionsfläche können dabei so zueinander angeordnet werden, dass das von der Lichtquelle emittierte Licht durch die Lichtleitvorrichtung auf eine vom Fahrer des Fahrzeugs abgewandte Seite der Rückblick-Reflexionsfläche umgelenkt wird. So kann eine Fläche der Rückblick-Reflexionsfläche für den Fahrer sichtbar beleuchtet werden, um eine Anzeigefunktion, beispielsweise eines Totwinkelassistenten, bereitzustellen.

Die Rückblick-Reflexionsfläche kann in einem Bereich eine Aussparung oder einen teilreflektierenden Teil umfassen, beispielsweise ein Piktogramm, der durch die Lichtquelle und die Lichtleitvorrichtung für einen Fahrer sichtbar hinterleuchtet wird.

Weitere Merkmale, Einzelheiten und Vorteile der Erfindung ergeben sich aus den beigefügten Zeichnungen und der folgenden Beschreibung, worin bevorzugte Ausführungsformen exemplarisch darstellt werden.

In der Zeichnung zeigt:
- **Fig. 1**: eine Draufsicht eines ersten Ausführungsbeispiels der Lichtleitvorrichtung;
- **Fig. 2**: eine Seitenansicht des Ausführungsbeispiels gemäß Figur 1;
- **Fig. 3**: eine Reflexionsseite bzw. Reflexionsschicht mit einer stufenartigen Struktur;
- **Fig. 4**: eine perspektivische Ansicht des Ausführungsbeispiels gemäß Figur 1;
- **Fig. 5**: eine perspektivische Ansicht einer Beleuchtungsvorrichtung mit einer Lichtleitvorrichtung mit Fokus auf die Lichteinkopplung;
- **Fig. 6**: eine perspektivische Ansicht einer Beleuchtungsvorrichtung mit einer Lichtleitvorrichtung mit Fokus auf die Lichtauskopplung; und
- **Fig. 7**: eine Explosionsansicht einer Rückblickvorrichtung mit einer Lichtleitvorrichtung.

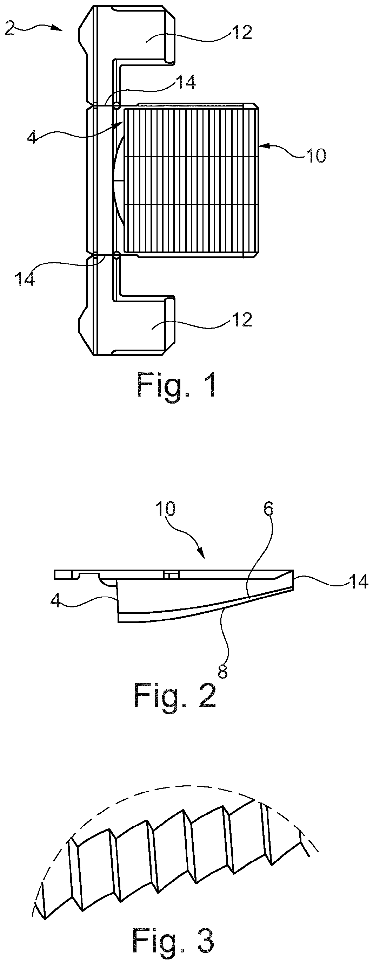

Fig. 1 zeigt eine Draufsicht einer Lichtleitvorrichtung 2 mit einer Lichteinkoppelseite 4, einer Reflexionsseite 6, einer Reflexionsschicht 8 (siehe Fig. 2), sowie einer Lichtauskoppelseite 10. In der Draufsicht der Fig. 1 liegt die Reflexionsseite 6 unter der Lichtauskoppelseite 10 und die Reflexionsschicht 8 liegt unter der Reflexionsseite 6. Die Lichtauskoppelseite 10 liegt der Reflexionsseite 6 und damit auch der Reflexionsschicht 8 gegenüber, so dass reflektiertes Licht möglichst gleichmäßig zur Lichtauskoppelseite 10 gelangt. Der Abstand zwischen der Lichtauskoppelseite 10 und der Reflexionsseite 6 und damit auch der Reflexionsschicht 8 verringert sich mit zunehmendem Abstand von der Lichteinkoppelseite 4. Die Lichtauskoppelseite 10 und die Reflexionsseite 6 können so kontinuierlich zusammenlaufen oder es wird eine Kante 14 gebildet, die auch eine Reflexionsschicht 8 haben kann.

Weiter zeigt Fig. 1 exemplarisch zwei Haltevorrichtungen 12, die sich in der Ebene der Lichtauskoppelseite 10 von der Lichtleitvorrichtung 2 weg erstrecken, die jeweils eine Sollbruchstelle 14 aufweisen. Je nach Einsatz der Lichtleitvorrichtung, beispielsweise in einer rechten oder linken Rückblickvorrichtung eines Kraftfahrzeugs, kann die nicht benötigte Haltevorrichtung 12 abgetrennt, beispielsweise abgebrochen werden.

Fig. 2 zeigt eine Seitenansicht der Lichtleitvorrichtung aus Fig. 1. Licht kann über die Lichteinkoppelseite 4 in die Lichtleitvorrichtung 2 eintreten, insbesondere im Wesentlichen parallel zur Lichtauskoppelseite 10. Das Licht wird dann über die Reflexionsseite 6 und die Reflexionsschicht 8 in Richtung Lichtauskoppelseite 10 umgelenkt.

Fig. 3 zeigt eine vergrößerte Darstellung einer stufenartig ausgebildeten Reflexionsseite 6 und/oder Reflexionsschicht 8. Eine solche stufenartige Ausbildung, die alternativ oder zusätzlich wellenartig sein kann, kann die Lenkung der von der Lichteinkoppelseite 4 kommenden Lichtstrahlen dahingehend verbessern, dass die Lichtauskopplung von der Lichtauskoppelseite 10 möglichst homogen und über die Lichtauskoppelseite 10 gleichmäßig verteilt ist.

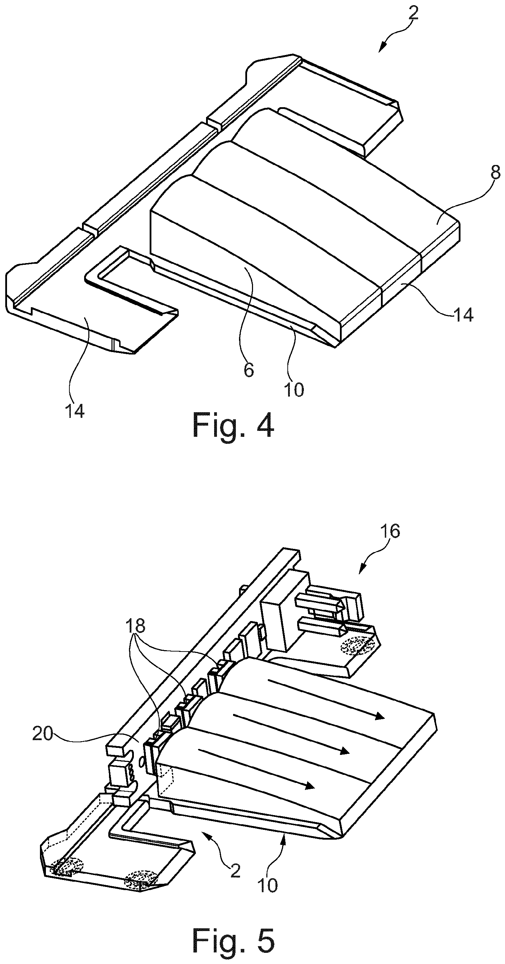

Fig. 4 zeigt die Lichtleitvorrichtung 2 in einer perspektivischen Darstellung. Die für drei Lichtquellen 18 optimierte Lichtleitvorrichtung 2 hat eine mit drei Teiltrichtern ausgebildete Reflexionsseite 6 und Reflexionsschicht 8. Die Längsachse dieser Teiltrichter erstreckt sich entlang der Hauptrichtung des eingekoppelten Lichts. Die Lichtleitvorrichtung 2 kann für jede andere Zahl von Lichtquellen 18 angepasst werden, beispielsweise 1, 2, 3, 4, 5, 6 oder mehr.

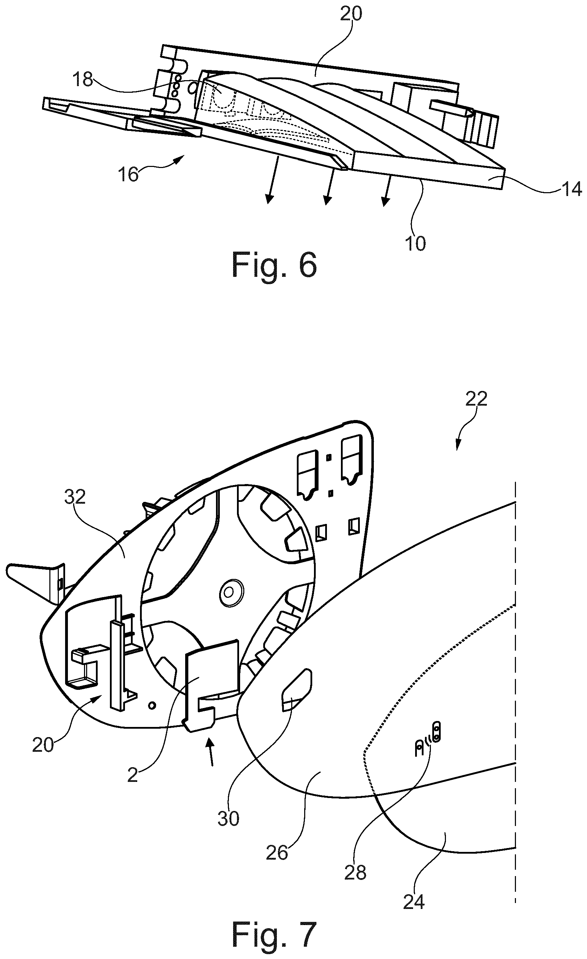

Fig. 5 zeigt eine Beleuchtungsvorrichtung 16 mit drei Lichtquellen 18, die an einer Platine 20 angeordnet sind. Die Platine 20 mit den LED Lichtquellen 18 ist so zur Lichtleitvorrichtung 2 angeordnet, dass das Licht, wie durch die Pfeile dargestellt, im Wesentlichen parallel zur Lichtauskoppelseite 10 emittiert wird. Dabei wird das Licht so durch die Reflexionsseite 6 und insbesondere durch die Reflexionsschicht 8 umgelenkt, dass es, wie aus den Pfeilen in Fig. 6 ersichtlich, die Lichtleitvorrichtung 2 über die Lichtauskoppelseite 10 verlässt.

Fig. 7 zeigt eine Explosionsansicht einer Rückblickvorrichtung 22 mit einer Lichtleitvorrichtung 2, die an einer Platine 20 oder direkt an einer Halterung 32 angeordnet werden kann. Die Rückblickvorrichtung 22 hat weiter eine Rückblick-Reflexionsfläche 24 und eine darunterliegende Heizschicht 26, wobei die Rückblick-Reflexionsfläche 24 ein Piktogramm für eine Totwinkel-Assistenz Anzeige hat, das über die Lichtleitvorrichtung 2 und durch eine Ausnehmung 30 in der Heizschicht 26 beleuchtet werden kann. Platine 20, Lichtleitvorrichtung 2 sowie Rückblick-Reflexionsfläche 24 mit Heizschicht 26 können auf einer Halterung 32 angeordnet werden. Der Klarheit halber werden die restlichen Teile einer Rückblickvorrichtung 22, wie beispielsweise Gehäuse, nicht gezeigt.

### Bezugszeichenliste

- 2: Lichtleitvorrichtung
- 4: Lichteinkoppelseite
- 6: Reflexionsseite
- 8: Reflexionsschicht
- 10: Lichtauskoppelseite
- 12: Haltevorrichtung
- 14: Sollbruchstelle
- 16: Beleuchtungsvorrichtung
- 18: Lichtquelle
- 20: Platine
- 22: Rückblickvorrichtung
- 24: Rückblick-Reflexionsfläche
- 28: Piktogramm

## Patentansprüche

1. Kraftfahrzeug-Beleuchtungsvorrichtung (16) in einer Anzeigevorrichtung in einer Rückblickvorrichtung (22), mit einer Rückblick-Reflexionsfläche (24), einem Leuchtmittel (18) und einer Lichtleitvorrichtung (2),
wobei die Lichtleitvorrichtung (2), Lichtquelle (18) und Rückblick-Reflexionsfläche (24) so zueinander angeordnet sind, dass das von der Lichtquelle (18) emittierte Licht durch die Lichtleitvorrichtung (2) auf eine vom Fahrer des Fahrzeugs abgewandte Seite der Rückblick-Reflexionsfläche (24) umlenkt wird,
wobei die Lichtleitvorrichtung (2) mit
a. einer Lichteinkoppelseite (4) zur Einkopplung von Licht einer Lichtquelle (18);
b. einer Reflexionsseite (6) mit einer Reflexionsschicht (8); und
c. einer Lichtauskoppelseite (10), die der Reflexionsseite (6) im Wesentlichen gegenüber liegt,
ausgebildet ist,
wobei der Abstand zwischen der Reflexionsseite (6) und der Lichtauskoppelseite (10) mit zunehmendem Abstand von der Lichteinkoppelseite (4) im Wesentlichen abnimmt und die Reflexionsseite (6) mit der Reflexionsschicht (8) so ausgestaltet ist, dass von der Lichteinkoppelseite (4) kommendes Licht zur Lichtauskoppelseite (10) umgelenkt wird,
wobei die Reflexionsseite (6) zumindest teilweise stufenartig oder wellenartig ausgebildet ist
und
wobei die Reflexionsschicht (8) eine Farb- oder Lackschicht ist, die auf die Reflexionsseite (6) aufgedruckt ist.

2. Kraftfahrzeug-Beleuchtungsvorrichtung nach Anspruch 1, wobei die Reflexionsschicht (8) zumindest teilweise dasselbe oder unterschiedliches Material wie die restliche Lichtleitvorrichtung (2) umfasst.

3. Kraftfahrzeug-Beleuchtungsvorrichtung nach Anspruch 1 oder 2, wobei die Reflexionsschicht (8) weiß ist.

4. Kraftfahrzeug-Beleuchtungsvorrichtung nach einem der vorhergehenden Ansprüche,
wobei die Farbschicht eine Temperaturbeständigkeit von ca. -40 °C bis +115 °C aufweist.

5. Kraftfahrzeug-Beleuchtungsvorrichtung nach einem der vorhergehenden Ansprüche,
wobei die Lichteinkoppelseite (4) und die Lichtauskoppelseite (10) flächenartig ausgebildet sind und diese Flächen im Wesentlichen orthogonal zueinander angeordnet sind.

6. Kraftfahrzeug-Beleuchtungsvorrichtung nach einem der vorhergehenden Ansprüche,
wobei die Lichtleitvorrichtung (2) so ausgestaltet ist, dass in die Lichtleitvorrichtung (2) eingekoppeltes und/oder reflektiertes und/oder ausgekoppeltes Licht im Wesentlichen keine Farbänderung erfährt oder eine Farbänderung, insbesondere zu rot oder gelb oder grün, erfährt.

7. Kraftfahrzeug-Beleuchtungsvorrichtung nach einem der vorhergehenden Ansprüche, weiter mit einer Haltevorrichtung (12) zur festen oder lösbaren Anordnung an einer Platine (20).

8. Kraftfahrzeug-Beleuchtungsvorrichtung nach Anspruch 7, wobei die Platine (20) mit mindestens einer Lichtquelle (18) ausgerüstet ist, wobei die Lichtquelle (18) relativ zur Lichtleitvorrichtung (2) so angeordnet ist, dass das von der Lichtquelle (18) emittierte Licht an der Lichteinkoppelseite (4) der Lichtleitvorrichtung (2) in diese eingekoppelt wird.

9. Verfahren zur Herstellung einer Kraftfahrzeug-Beleuchtungsvorrichtung nach einem der vorhergehenden Ansprüche, wobei die Lichtleitvorrichtung (2) mit folgenden Schritten hergestellt wird:
Bereitstellen eines Grundkörpers mit einer Lichteinkoppelseite (4), einer Reflexionsseite (6) und einer Lichtauskoppelseite (10), die der Reflexionsseite (6) im Wesentlichen gegenüber liegt;
Aufdrucken einer Reflexionsschicht (8) in Form einer Farb- oder Lackschicht an der Reflexionsseite (6), wobei die Reflexionsschicht (8) mittels Tampon-Druck an dem Grundkörper angeordnet wird, unter Verwendung von Abdeckschablonen.

10. Verfahren nach Anspruch 9, wobei
die Reflexionsschicht (8) aus einem ersten Material und der Grundkörpers aus einem zweiten Material bereitgestellt werden.

11. Rückblickvorrichtung (22) für ein Kraftfahrzeug mit einer Rückblick-Reflexionsfläche (24), einem Leuchtmittel (18) und einer Kraftfahrzeug-Beleuchtungsvorrichtung (16) nach einem der Ansprüche 1 bis 8.

12. Rückblickvorrichtung nach Anspruch 11, wobei die Anzeigevorrichtung für eine Anzeige eines Totwinkel-Assistenten ausgebildet ist.

13. Rückblickvorrichtung (22) nach Anspruch 11 oder 12, wobei die Rückblick-Reflexionsfläche (24) in einem Bereich einen nicht reflektierenden oder teilreflektierenden Teil umfasst, insbesondere ein Piktogramm (28), der durch die Lichtquelle (18) und die Lichtleitvorrichtung (2) hinterleuchtet wird.

## Claims

1. A motor vehicle lighting device (16) in an indicator device in a rear-view device (22), having a rear-view reflection surface (24), an illuminant (18) and a light guiding device (2),
wherein the light guiding device (2), light source (18) and rear-view reflection surface (24) are arranged with respect to one another such that the light emitted by the light source (18) is deflected by the light guiding device (2) to a side of the rear-view reflection surface (24) facing away from the driver of the vehicle,
wherein the light guiding device (2) is configured with
a. a light incoupling side (4) for incoupling light from a light source (18);
b. a reflection side (6) having a reflection layer (8); and
c. a light outcoupling side (10) which is located substantially opposite the reflection side (6),
wherein the distance between the reflection side (6) and the light outcoupling side (10) substantially decreases as the distance from the light incoupling side (4) increases and the reflection side (6) having the reflection layer (8) is designed such that light arriving from the light incoupling side (4) is deflected to the light outcoupling side (10),
wherein the reflection side (6) at least partially has a step-like or wave-like configuration,
and
wherein the reflection layer (8) is a colour or lacquer coat that is imprinted on the reflection side (6).

2. The motor vehicle lighting device according to claim 1, wherein the reflection layer (8) at least partially comprises the same or different material as the rest of the light guiding device (2).

3. The motor vehicle lighting device according to claim 1 or 2, wherein the reflection layer (8) is white.

4. The motor vehicle lighting device according to any one of the preceding claims,
wherein the colour coat has a temperature resistance of approximately -40 °C to + 115°C.

5. The motor vehicle lighting device according to any one of the preceding claims,
wherein the light incoupling side (4) and the light outcoupling side (10) are configured as plane and these surfaces are arranged substantially orthogonal to one another.

6. The motor vehicle lighting device according to any one of the preceding claims,
wherein the light guiding device (2) is designed such that light coupled into the light guiding device (2) and/or reflected and/or outcoupled substantially experiences no change in colour or experiences a change in colour, in particular to red or yellow or green.

7. The motor vehicle lighting device according to any one of the preceding claims, further having a holding device (12) for tight or detachable arrangement on a printed circuit board (20).

8. The motor vehicle lighting device according to claim 7, wherein the printed circuit board (20) is equipped with at least one light source (18), wherein the light source (18) is arranged relative to the light guiding device (2) so that the light emitted by the light source (18) is coupled on the light incoupling side (4) of the light guiding device (2) into said light guiding device.

9. A method for producing a motor vehicle lighting device according to any one of the preceding claims, wherein the light guiding device (2) is produced by means of the following steps:
providing a base body with a light incoupling side (4), a reflection side (6) and a light outcoupling side (10) which is located substantially opposite the reflection side (6);
imprinting a reflection layer (8) in the form of a colour or lacquer coat on the reflection side (6), wherein the reflection layer (8) is arranged on the base body by means of pad printing, using cover templates.

10. The method according to claim 9, wherein
the reflection layer (8) is provided from a first material and the base body is provided from a second material.

11. A rear-view device (22) for a motor vehicle having a rear-view reflection surface (24), an illuminant (18) and a motor vehicle lighting device (16) according to any one of claims 1 to 8.

12. The rear-view device according to claim 11, wherein the display device is configured for an indicator of a blind spot monitor.

13. The rear-view device (22) according to claim 11 or 12, wherein the rear-view reflection surface (24) comprises in one region a non-reflecting or partially reflecting part, in particular a pictogram (28), which is backlit by the light source (18) and the light guiding device (2).

## Revendications

1. Dispositif d'éclairage de véhicule à moteur (16) dans un dispositif d'affichage dans un dispositif de rétroviseur (22), avec une surface réfléchissante de rétroviseur (24), un moyen d'éclairage (18) et un dispositif de conducteur lumineux (2),
le dispositif de conducteur lumineux (2), la source lumineuse (18) et la surface réfléchissante de rétroviseur (24) étant disposés les uns par rapport aux autres de telle sorte que la lumière émise par la source lumineuse (18) est déviée par le dispositif de conducteur lumineux (2) sur un côté de la surface réfléchissante de rétroviseur (24) opposé au conducteur du véhicule,
le dispositif de conducteur lumineux (2) étant formé avec
a. un côté de couplage de lumière (4) pour le couplage de lumière dans une source lumineuse (18) ;
b. un côté réfléchissant (6) avec une couche réfléchissante (8) ; et
c. un côté du découplage de lumière (10), qui est essentiellement opposé au côté réfléchissant (6),
la distance entre le côté réfléchissant (6) et le côté du découplage de lumière (10) diminuant essentiellement au fur et à mesure que la distance d'avec le côté de couplage de lumière (4) augmente, et le côté réfléchissant (6) avec la couche réfléchissante (8) étant conçu de telle sorte que la lumière venant du côté de couplage de lumière (4) est déviée vers le côté du découplage de lumière (10),
le côté réfléchissant (6) étant formé au moins partiellement de façon échelonnée ou ondulée
et
la couche réfléchissante (8) étant une couche de peinture ou de laque qui est imprimée sur le côté réfléchissant (6).

2. Dispositif d'éclairage de véhicule à moteur selon la revendication 1, la couche réfléchissante (8) comprenant au moins partiellement le même matériau ou un matériau différent que le reste du dispositif de conducteur lumineux (2).

3. Dispositif d'éclairage de véhicule à moteur selon la revendication 1 ou 2,
la couche réfléchissante (8) étant blanche.

4. Dispositif d'éclairage de véhicule à moteur selon l'une quelconque des revendications précédentes, la couche de peinture présentant une résistance à la température d'environ -40 °C à +115 °C.

5. Dispositif d'éclairage de véhicule à moteur selon l'une quelconque des revendications précédentes, le côté de couplage de lumière (4) et le côté du découplage de lumière (10) étant formés de façon plane et ces surfaces étant disposées de façon essentiellement perpendiculaire l'une par rapport à l'autre.

6. Dispositif d'éclairage de véhicule à moteur selon l'une quelconque des revendications précédentes, le dispositif de conducteur lumineux (2) étant conçue de telle sorte que la lumière couplée dans le dispositif de conducteur lumineux (2) et/ou réfléchie et/ou découplée ne subit essentiellement aucun changement de couleur ou subit un changement de couleur, en particulier en rouge ou en jaune ou en vert.

7. Dispositif d'éclairage de véhicule à moteur selon l'une quelconque des revendications précédentes, en outre avec un dispositif de retenue (12) pour la disposition fixe ou amovible d'une platine (20).

8. Dispositif d'éclairage de véhicule à moteur selon la revendication 7, la platine (20) étant équipée d'au moins une source lumineuse (18), la source lumineuse (18) étant disposée relativement au dispositif de conducteur lumineux (2) de telle sorte que la lumière émise par la source lumineuse (18) est couplée dans le dispositif de conducteur lumineux (2) sur le côté de couplage de lumière (4) de celui-ci.

9. Procédé pour la fabrication d'un dispositif d'éclairage de véhicule à moteur selon l'une quelconque des revendications précédentes, le dispositif de conducteur lumineux (2) étant fabriqué avec les étapes suivantes :
mise à disposition d'un corps de base avec un côté de couplage de lumière (4), un côté réfléchissant (6) et un côté du découplage de lumière (10), lequel est essentiellement opposé au côté réfléchissant (6) ;
impression d'une couche réfléchissante (8) sous la forme d'une couche de peinture ou de laque sur le côté réfléchissant (6), la couche réfléchissante (8) étant disposée à l'aide d'une tampographie sur le corps de base, en utilisant des pochoirs.

10. Procédé selon la revendication 9,
la couche réfléchissante (8) étant mise à disposition dans un premier matériau et le corps de base dans un deuxième matériau.

11. Dispositif de rétroviseur (22) pour un véhicule à moteur avec une surface réfléchissante de rétroviseur (24), un moyen d'éclairage (18) et un dispositif d'éclairage de véhicule à moteur (16) selon l'une des revendications 1 à 8.

12. Dispositif de rétroviseur selon la revendication 11, le dispositif d'affichage étant formé pour un affichage d'un assistant d'angle mort.

13. Dispositif de rétroviseur (22) selon la revendication 11 ou 12, la surface réfléchissante de rétroviseur (24) comprenant dans une zone un élément non-réfléchissant ou partiellement réfléchissant, en particulier un pictogramme (28), lequel est rétroéclairé par la source lumineuse (18) et le dispositif de conducteur lumineux (2).
